(19) Europäisches Patentamt
European Patent Office
Office européen des brevets

(11) **EP 3 019 841 B1**

(12) **FASCICULE DE BREVET EUROPEEN**

(45) Date de publication et mention de la délivrance du brevet:
**12.07.2017 Bulletin 2017/28**

(51) Int Cl.:
***G01J 4/00*** *(2006.01)*     ***G02B 27/28*** *(2006.01)*
***G01N 21/21*** *(2006.01)*

(21) Numéro de dépôt: **14749880.2**

(22) Date de dépôt: **20.06.2014**

(86) Numéro de dépôt international:
**PCT/FR2014/051539**

(87) Numéro de publication internationale:
**WO 2015/004358 (15.01.2015 Gazette 2015/02)**

(54) **DISPOSITIF POUR COMPENSER LA DÉRIVE D'UN DÉPHASAGE D'UN MODULATEUR D'ÉTAT DE POLARISATION D'UN FAISCEAU LUMINEUX**

VORRICHTUNG ZUR KOMPENSATION DES DRIFTS EINER PHASENVERSCHIEBUNG EINER VORRICHTUNG ZUR MODULIERUNG DES POLARISATIONSZUSTANDES EINES LICHTSTRAHLS

DEVICE FOR COMPENSATING FOR THE DRIFT OF A PHASE SHIFT OF A DEVICE FOR MODULATING THE POLARIZATION STATE OF A LIGHT BEAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.07.2013 FR 1356803**

(43) Date de publication de la demande:
**18.05.2016 Bulletin 2016/20**

(73) Titulaires:
• **Université de Strasbourg**
  **67081 Strasbourg (FR)**
• **CENTRE NATIONAL DE LA RECHERCHE SCIENTIFIQUE - CNRS**
  **75016 Paris 16 (FR)**

(72) Inventeurs:
• **ZALLAT, Jihad**
  **F-67540 Ostwald (FR)**
• **TORZYNSKI, Marc**
  **F-67000 Strasbourg (FR)**

• **LALLEMENT, Alex**
  **F-67640 Fegersheim (FR)**
• **HEINRICH, Christian**
  **F-67400 Illkirch (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**US-A1- 2004 130 717    US-B1- 6 795 184**

• **MATTHIEU DUBREUIL ET AL: "Mueller matrix polarimetry for improved liver fibrosis diagnosis", OPTICS LETTERS, OPTICAL SOCIETY OF AMERICA, US, vol. 37, no. 6, 15 mars 2012 (2012-03-15), pages 1061-1063, XP001574562, ISSN: 0146-9592, DOI: 10.1364/OL.37.001061 [extrait le 2012-03-12]**

**EP 3 019 841 B1**

## Description

### Domaine de l'invention

La présente invention concerne de manière générale les dispositifs d'analyse et/ou de génération d'un état de polarisation d'un point de mesure d'un objet cible.

Plus particulièrement, il s'agit d'un dispositif d'analyse et/ou de génération appliqué au domaine médical.

### Etat de la technique

Dans le domaine, on connaît déjà un dispositif d'analyse et/ou de génération d'un état de polarisation d'un point de mesure d'un objet cible, le dispositif comprenant :

- un polariseur propre à sélectionner, dans une onde lumineuse incidente, un faisceau lumineux polarisé rectilignement selon une direction prédéfinie,
- un premier élément biréfringent propre à être traversé par ledit faisceau lumineux,
- un deuxième élément biréfringent identique au premier élément et propre à être traversé par ledit faisceau lumineux, ledit faisceau lumineux étant alors destiné à être dirigé directement ou indirectement vers ledit objet pour être réfléchi sous la forme d'un rayonnement réfléchi,

Les premier et second éléments biréfringents propres à être traversés par le faisceau lumineux sont sensibles aux conditions de l'environnement dans lequel ils évoluent. A titre d'exemple, les premier et second éléments peuvent être sensibles à la température, ce qui amène à des procédures d'étalonnage récurrentes à chaque utilisation du dispositif d'analyse et/ou génération. Ces procédures d'étalonnage servent à corriger les effets de la dérive de la température d'un des premier et second éléments biréfringents.

Le document US 2004/130717 divulgue un dispositif d'analyse d'un état de polarisation comprenant un polariseur et premier et deuxième éléments biréfringents. Plus généralement, les premier et second éléments étant sensibles aux conditions de l'environnement, il peut exister une dérive de phase entre les premier et second éléments biréfringents nécessitant alors des procédures d'étalonnage chronophages afin de compenser cette dérive.

### Objet de l'invention

Dans ce contexte, le problème ici posé est de proposer un dispositif d'analyse et/ou de génération d'un état de polarisation diminuant le temps consacré à l'étalonnage de ce dispositif.

La solution proposée par la présente invention est qu'un ensemble optique, constitué d'un ou plusieurs éléments optiques, est situé sur un trajet optique compris entre le premier élément et le deuxième élément, l'ensemble optique étant constitué de :

- un nombre impair de miroirs, ou,
- un nombre impair de lames demi-onde, ou,
- un nombre confondu impair de miroirs ou lames demi-onde.

Dans un mode de réalisation de l'invention, le premier élément et/ou le deuxième élément est :

- une lame biréfringente mobile en rotation, ou
- un élément à cristaux liquides nématiques.

Dans un autre mode de réalisation de l'invention, le dispositif comprend en outre une source lumineuse propre à émettre un faisceau lumineux, ladite source lumineuse étant propre à émettre un faisceau en amont du polariseur.

Dans un autre mode de réalisation de l'invention :

- le premier élément comprend une première face s'étendant dans un premier plan orthogonal à ladite direction prédéfinie, ledit miroir s'étendant dans un deuxième plan sécant d'un angle $\alpha$ compris entre 20° et 80° par rapport au premier plan,
- le deuxième élément comprend une troisième face s'étendant dans un troisième plan orthogonal à ladite direction prédéfinie, les deuxième et troisième plans étant sécants d'un angle $\alpha'$ égal, en valeur, à $\alpha$.

Dans un mode de réalisation, l'ensemble optique comprend une pluralité d'éléments biréfringents en nombre pair.

Suivant un mode de réalisation, le dispositif comprend en outre un capteur photosensible propre à convertir le faisceau réfléchi en un signal électrique.

Suivant un deuxième objet de l'invention, est également visée une méthode de génération d'un état de polarisation d'un point de mesure d'un objet cible comportant les étapes suivantes :

- sélectionner dans une onde lumineuse incidente un faisceau incident polarisé rectilignement selon une direction prédéfinie,
- traverser successivement un premier élément biréfringent puis un deuxième élément biréfringent avec ledit faisceau incident,
- diriger directement ou indirectement le faisceau en amont du deuxième élément biréfringent vers ledit objet qui émet alors un faisceau réfléchi.

La méthode comprend en outre une étape consistant à compenser la dérive de phase desdits premier et deuxième éléments par l'intégration d'un ensemble optique, constitué d'un ou plusieurs éléments optiques, situé sur un trajet optique du faisceau compris entre lesdits premier et deuxième éléments, l'ensemble optique étant constitué de :

- un nombre impair de miroirs, ou,
- un nombre impair de lames demi-onde, ou,
- un nombre confondu impair de miroirs ou lames demi-onde.

Suivant un troisième objet de l'invention, est également visée une méthode d'analyse d'un état de polarisation d'un point de mesure d'un objet cible comportant les étapes suivantes :

- émettre un faisceau réfléchi issu dudit objet et le diriger directement ou indirectement en aval d'un deuxième élément biréfringent,
- traverser successivement le deuxième élément biréfringent, puis un premier élément biréfringent avec ledit faisceau réfléchi,
- convertir le faisceau réfléchi en un signal électrique.

La méthode comprend en outre une étape consistant à compenser la dérive de phase desdits premier et deuxième éléments par l'intégration d'un ensemble optique, constitué d'un ou plusieurs éléments optiques sur un trajet optique du faisceau compris entre lesdits premier et deuxième éléments, l'ensemble optique étant constitué de :

- un nombre impair de miroirs, ou,
- un nombre impair de lames demi-onde, ou,
- un nombre confondu impair de miroirs ou lames demi-onde.

D'autres caractéristiques et avantages ressortiront encore de la description qui est faite ci-après, à titre indicatif et nullement limitatif, en référence aux dessins annexés, dans lesquels :

- la figure 1 montre un schéma de principe d'un exemple dispositif de génération d'un état de polarisation dont l'ensemble optique est constitué d'un miroir,
- la figure 2 montre un schéma de principe d'un exemple de dispositif d'analyse d'un état de polarisation dont l'ensemble optique est constitué d'un miroir,
- la figure 3 montre un schéma de principe d'un exemple de dispositif d'analyse et/ou génération d'un état de polarisation dont l'ensemble optique est constitué d'une lame demi-onde,
- la figure 4 montre un schéma de principe d'un exemple de dispositif d'analyse et/ou génération d'un état de polarisation dont l'ensemble optique est constitué de trois lames demi-onde,
- la figure 5 montre un schéma de principe d'un exemple de dispositif d'analyse et/ou génération d'un état de polarisation dont l'ensemble optique est constitué de trois miroirs,
- la figure 6 montre un schéma de principe d'un exemple de dispositif d'analyse et/ou génération d'un état de polarisation conforme à l'art antérieur et où les orientation angulaires $\theta$, $\psi_1$ et $\psi_2$ sont référencées.
- la figure 7 montre un schéma de principe d'un exemple de dispositif d'analyse et/ou génération complet d'un état de polarisation qui utilise deux fois l'architecture proposée.

**Justification théorique**

En référence à la figure, dans le cas d'un dispositif d'analyse d'un état de polarisation d'un point de mesure d'un objet cible, il est possible de mesurer la polarisation de la lumière provenant d'un objet cible en accédant au vecteur de Stokes de la lumière provenant de chaque pixel de l'objet. Cela se fait par l'utilisation d'éléments biréfringents tels que les lames quarts d'onde mobiles en rotation ou des éléments à cristaux liquides nématiques présentant l'avantage de ne nécessiter aucun élément mécanique et permettant des cadences d'acquisition proches de la cadence vidéo.

En configuration d'analyse d'un état de polarisation, l'état de polarisation de la lumière provenant du polariseur vers le capteur photosensible S''' est décrite après son passage à travers les divers éléments optiques, par le produit de la matrice de Mueller du système entier (produit des matrices de Mueller des éléments optiques qui constituent le dispositif d'analyse d'un état de polarisation) avec le vecteur de Stokes entrant S.

La polarisation du faisceau lumineux provenant de l'onde lumineuse incidente est donc décrite après son passage à travers les divers éléments optiques par le produit des matrices de Mueller de ces derniers et se traduit alors par la relation :

$$\mathtt{S''' = M_P(\Theta) \ . \ M_R(\delta_2, \psi_2) \ . M_R(\delta_1, \psi_1) \ . \ S}$$

$M_R(\delta_1, \psi_1)$ et $M_R(\delta_2, \psi_2)$ sont les matrices de Mueller des premier et deuxième éléments biréfringents et $M_P(\theta)$ est la matrice de Mueller du polariseur. $\psi_1$, $\psi_2$ sont les orientations des axes rapides des premier et deuxième biréfringents par rapport à l'axe horizontal. $\theta$ correspond à l'orientation du polariseur linéaire. $\delta_1$, $\delta_2$ sont les déphasages obtenus en appliquant les tensions V1 et V2. Ces déphasages sont souhaités. Des dérives de phase vont se rajouter à ces déphasages, ce sont ces dérives de phase qui doivent être corrigées.

S''' a classiquement quatre composantes I''', Q''', U''' et V'''. Elles correspondent aux composantes du vecteur de Stokes à mesurer, notamment l'intensité I''' qui correspond à l'intensité mesurée par le capteur photosensible. On notera :

$$\mathtt{(I''', Q''', U''', V''') \ = \ (s_0, s_1, s_2, s_3)}$$

S a quatre composantes I,Q,U et V. L'intensité I provenant de l'objet s'écrit sous la forme :

$$\mathtt{I(\delta_1, \delta_2, \psi_1, \psi_2, \Theta) = s_0 + f(\delta_1, \delta_2, \psi_1, \psi_2, \Theta).s_1 + g(\delta_1, \delta_2, \psi_1, \psi_2, \Theta).s_2}$$
$$\mathtt{+ \ h(\delta_1, \delta_2, \psi_1, \psi_2, \Theta). \ s_3}$$
$$\mathtt{(I)}$$

Les paramètres de Stokes de l'onde provenant de l'objet peuvent être obtenus en choisissant des déphasages et orientations qui caractérisent le dispositif d'analyse d'un état de polarisation à savoir les paramètres $\delta_1$, $\delta_2$, $\psi_1$, $\psi_2$, et $\theta$. Dans la pratique, les orientations $\psi_1$, $\psi_2$, et $\theta$ sont choisies afin de maximiser la modulation de l'intensité issue du dispositif d'analyse d'un état de polarisation.

Ainsi la solution proposée consiste à disposer, entre les premier et deuxième éléments biréfringents, un ensemble optique constitué de :

-    un nombre impair de miroirs, ou,
-    un nombre impair de lames demi-onde, ou,
-    un nombre confondu impair de miroirs ou lames demi-onde.

Constituer de cette manière, l'ensemble optique a une matrice de Mueller qui a la forme suivante :

$$\mathtt{M_I} = \begin{pmatrix} 1 & 0 & 0 & 0 \\ 0 & 1 & 0 & 0 \\ 0 & 0 & -1 & 0 \\ 0 & 0 & 0 & -1 \end{pmatrix}$$

La polarisation du faisceau lumineux provenant de l'onde lumineuse incidente décrite après son passage à travers les divers éléments optiques comprenant en outre l'ensemble optique par le produit des matrices de Mueller de ces derniers se traduit alors par la relation :

$$S''' = M_P(\Theta) . M_R(\delta_2, \psi_2) . M_I . M_R(\delta_1, \psi_1) S$$

Il convient alors de choisir $\psi_1$, $\psi_2$, et $\theta$ de façon à maximiser la modulation de l'intensité du dispositif d'analyse.

A titre d'exemple, en partant de la relation (I) et en choisissant les orientations, $\theta = n/2$, $\psi_1 = \pi/8$ et $\psi_2 = 3n/8$, l'intensité mesurée est donnée par :

$$I(\delta_1, \delta_2, \psi_1, \psi_2, \theta) = \frac{1}{4} . (2.s_0 - s_1 - s_2 + (-s_1 + s_2).\cos(\delta1 - \delta2) + \sqrt{2} . s_3.\sin(\delta1 - \delta2))$$

Dans ce cas, si la température change de $T_0$ à $T_1$, $\delta_1$ dévie de $\Delta_1$ et $\delta_2$ dévie de $\Delta_2$. Les premier et deuxième éléments biréfringents étant identiques, on peut considérer que $\Delta_1 = \Delta_2$.

Ainsi, la disposition d'un ensemble optique tel que susmentionné sur un trajet optique compris entre le premier élément et le deuxième élément permet avantageusement de faire apparaître l'expression ($\delta1 - \delta2$) dans l'expression de $I(\delta_1, \delta_2, \psi_1, \psi_2, \theta)$ ce qui permet d'éliminer les dérives $\Delta_1$ et $\Delta_2$ de cette expression et donc de supprimer certaines procédures d'étalonnage visant à les déterminer. La dérive de phase (due par exemple à une variation de la température) du premier élément est compensée par la dérive de phase du deuxième élément ($\delta1 + \Delta_1 - \delta2 - \Delta_2 = \delta1 - \delta2$).

## Descriptions d'exemples de réalisation

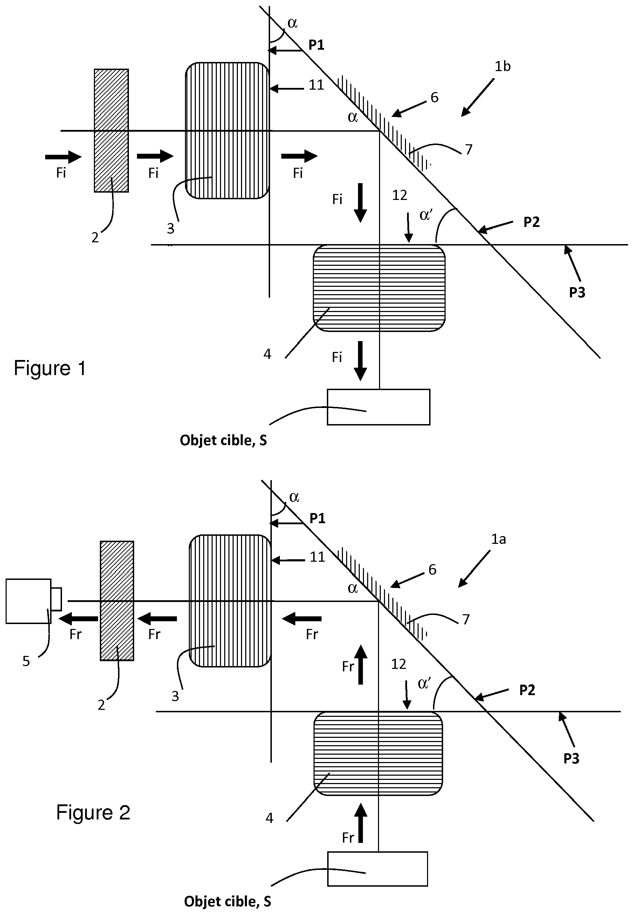

En référence aux figures 1 à 5, est représenté une source S lumineuse propre à émettre une onde lumineuse incidente, un dispositif 1a, 1b d'analyse et/ou de génération d'un état de polarisation d'un point de mesure d'un objet cible qui comprend :

- un polariseur 2 propre à sélectionner, dans une onde lumineuse incidente, un faisceau lumineux incident $F_i$ polarisé rectilignement selon une direction prédéfinie,
- un premier élément biréfringent 3 propre à être traversé par ledit faisceau lumineux incident $F_i$ et par un faisceau réfléchi $F_r$ qui est réfléchi par l'objet cible,
- un deuxième élément biréfringent 4 identique au premier élément 3 et propre à être traversé par ledit faisceau lumineux incident $F_i$ et par le faisceau lumineux réfléchi $F_r$, ledit faisceau lumineux incident $F_i$ étant destiné à être dirigé directement ou indirectement vers ledit objet pour être réfléchi sous la forme dudit faisceau lumineux réfléchi $F_r$,
- un capteur photosensible 5 propre à convertir le faisceau lumineux réfléchi $F_r$ en un signal électrique.

Sont également présents des moyens de calcul de l'information de polarisation à partir du faisceau lumineux réfléchi $F_r$ par l'objet cible.

Dans la suite de la description, le faisceau lumineux incident $F_i$ est appelé « faisceau incident $F_i$» sur l'ensemble du trajet depuis la source lumineuse vers l'objet cible et « faisceau réfléchi $F_r$» sur l'ensemble du trajet de l'objet cible vers le capteur 5.

La source lumineuse S est destinée à émettre un faisceau lumineux incident $F_i$ polarisé rectilignement selon une direction prédéfinie. Cette source lumineuse S peut, par exemple être constituée par une diode laser ou par une source large bande du type lampe halogène.

Classiquement, cette source lumineuse S propre à émettre un faisceau lumineux est associée au polariseur 2, en amont de celui-ci.

Le polariseur 2 est situé en aval de la source lumineuse de sorte qu'il puisse sélectionner, dans une onde lumineuse incidente, un faisceau lumineux polarisé rectilignement. Il est donc propre à être traversé par l'onde lumineuse incidente.

Un ensemble optique 6, constitué d'un ou plusieurs éléments optiques, est situé sur un trajet optique compris entre le premier élément 3 et le deuxième élément 4, l'ensemble optique 6 étant constitué de :

- un nombre impair de miroirs 7, ou,
- un nombre impair de lames demi-onde 8, ou,

- un nombre confondu impair de miroirs 7 ou lames demi-onde 8.

Sur les figures 1 à 5, le premier élément biréfringent 3 est disposé entre le polariseur 2 et l'ensemble optique 6, sur le trajet optique du faisceau lumineux. Le second élément biréfringent 4 est disposé entre l'ensemble optique 6 et la source lumineuse S.

Dans un mode de réalisation de l'invention, le premier élément biréfringent 3 est une lame biréfringente mobile en rotation. Préférentiellement, la lame biréfringente est une lame à retard. Le premier élément biréfringent 3 peut également être un élément à cristaux liquides nématiques.

Dans un mode de réalisation de l'invention, le deuxième élément biréfringent 4 est une lame biréfringente mobile en rotation. Préférentiellement, la lame biréfringente est une lame à retard. Le deuxième élément biréfringent 4 peut également être un élément à cristaux liquides nématiques.

Les premier et second éléments biréfringents 3, 4 sont tous les deux des lames à retards ou tous les deux des retardeurs à cristaux liquides nématiques.

Les premier et second éléments biréfringents 3, 4 définissent des retardateurs. Préférentiellement, il s'agit de retardateurs à cristaux liquides. Chacun de ces premier et second éléments biréfringents 3, 4 permet de modifier l'état de polarisation du faisceau incident sans nécessiter d'actions mécaniques sur le dispositif, comme par exemples des rotations. L'estimation des paramètres de Stokes est plus précise et plus rapide. Le paramètre variable de commande de ces premier et deuxième éléments biréfringents est un retard $\delta$. Ce retard $\delta$ est commandé par la valeur efficace d'une tension ajustée, à l'aide d'un ordinateur, par l'intermédiaire d'une carte de commande.

Dans un mode de réalisation, l'ensemble optique 6 comprend une pluralité d'élément biréfringent en nombre pair. Pour chaque pair d'élément biréfringents, un premier membre de ladite paire est situé en amont de l'ensemble optique ayant une matrice de Mueller donnée par $\mathrm{MI} = \begin{pmatrix} 1 & 0 & 0 & 0 \\ 0 & 1 & 0 & 0 \\ 0 & 0 & -1 & 0 \\ 0 & 0 & 0 & -1 \end{pmatrix}$, et le second membre de cette paire est situé en aval de cet ensemble optique 6 ayant cette même matrice de Mueller MI.

Préférentiellement, le dispositif d'analyse 1a et/ou génération 1b comprend exactement deux éléments biréfringent 3, 4. L'utilisation de deux éléments biréfringents 3, 4 se justifie par le fait que la matrice de mesure polarimétrique $P(\delta_i, \psi, \theta)$ est mal conditionnée ($I_i = P(\delta_i, \psi, \theta)$. S) quels que soient le nombre et la valeur des retards $\delta_i$.

Sur la figure 1, est montré, en configuration de génération d'un état de polarisation, que l'onde lumineuse incidente passe au travers du polariseur 2 qui sélectionne un faisceau incident $F_i$ polarisé rectilignement selon une direction prédéfinie.

Le faisceau incident $F_i$ traverse successivement le premier élément biréfringent 3 pour être réfléchi par l'ensemble optique 6 constitué par le miroir 7 qui est situé sur le trajet optique compris entre le deuxième élément 4 et le premier élément 3. Le faisceau incident $F_i$ traverse ensuite le deuxième élément biréfringent 4.

Sur la figure 2, est montré, en configuration d'analyse d'un état de polarisation que le faisceau réfléchi passe successivement au travers du deuxième élément biréfringent 4, puis est réfléchi par l'ensemble optique 6 constitué par le miroir 7 qui est situé sur le trajet optique compris entre le deuxième élément 4 et le premier élément 3, passe au travers du premier élément biréfringent 3 qui est suivi du polariseur 2. L'intensité lumineuse résultante est alors mesurée par un capteur photosensible propre à convertir le rayonnement réfléchi par l'objet cible en un signal électrique.

On observe que le faisceau réfléchi par l'objet cible a un trajet optique traversant successivement le deuxième élément biréfringent 4, avant de se diriger vers l'ensemble optique 6 ayant la matrice de Mueller MI et défini par un miroir 7, puis de traverser le premier élément biréfringent 3 qui est suivi par le polariseur 2. A la fin du trajet optique, le capteur photosensible 5 peut convertir le faisceau réfléchi $F_r$ en un signal électrique analogique. Ce signal peut ensuite être amplifié, puis numérisé par un convertisseur analogique-numérique et traiter par les moyens de calcul de l'information de polarisation, afin d'analyser l'état de polarisation d'un point de mesure de l'objet cible.

Avantageusement, le dispositif d'analyse et/ou de génération 1a,1b peut comprendre un filtre 9 monochromatique afin de centrer l'onde lumineuse incidente sur une longueur d'onde prédéterminée.

Sur les figures 1 et 2, sont représentées des solutions dans lesquelles les ensembles optiques 6 sont constitués par des miroirs 7. Le principe de la compensation de la dérive de phase des premiers et deuxièmes éléments 3, 4 est donc d'introduire, sur le trajet optique, entre les premier et deuxième éléments biréfringents 3, 4, un ou plusieurs éléments optiques qui introduisent un déphasage global de n radians. Ce déphasage de n radians a pour effet de compenser la dérive de phase du premier élément biréfringent 3 par la dérive de phase du deuxième élément biréfringent 4.

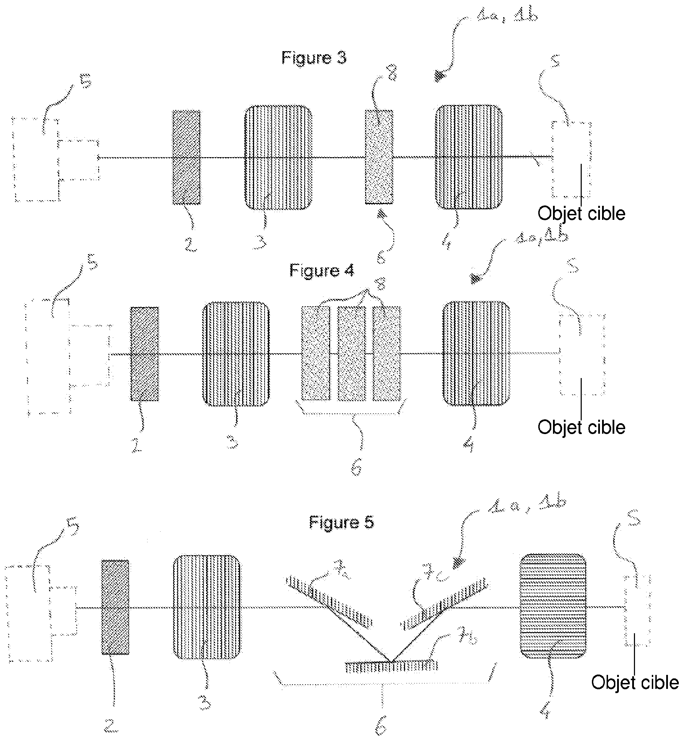

Sur les figures 3 et 4, sont représentées des solutions pour lesquelles l'ensemble optique 6 est constitué par des lames demi-ondes. Le trajet optique emprunté se différencie en ce que les faisceaux incident et réfléchi traversent les lames demi-ondes. Comme on peut le voir sur les figures 3 et 4, le principe de l'analyse et/ou de génération de l'état de polarisation est le même, mais l'orientation donnée au trajet optique est différent. L'utilisation de miroirs 7 influencera l'orientation angulaire du trajet optique de part et d'autre de l'ensemble optique 6, c'est-à-dire en entrée et en sortie. A l'inverse, l'utilisation de lame demi-ondes ne modifie pas l'orientation angulaire du trajet optique de part et d'autre de l'ensemble optique 6, c'est-à-dire en entrée et en sortie. Par exemple, un faisceau traversant une lame demi-onde dans sa position d'utilisation aura une trajectoire rectiligne depuis l'entrée et après la sortie de l'ensemble optique 6.

Dans ces conditions, l'utilisation de lames demi-ondes (figures 3 et 4) convient pour une configuration en ligne, lorsque la bande spectrale est étroite, tandis que l'utilisation de miroirs 7 (figures 1, 2 et 5) convient particulièrement pour une configuration multi spectrale ou mesures large-bande.

Dans le mode de réalisation représenté figure 3, l'ensemble optique 6 est constitué d'une lame demi-onde.

Dans le mode de réalisation représenté figure 4, l'ensemble optique 6 est constitué de trois lames demi-ondes successives. Elles se font face entre elles.

Le nombre impair de lames de demi-ondes compris entre les premier et deuxième éléments biréfringent est ici essentiel puisqu'il s'agit d'introduire un déphasage global de n radians.

Selon un mode de réalisation montré sur les figures 1 et 2, le premier élément 3 comprend une première face 11 s'étendant dans un premier plan (P1) orthogonal à ladite direction prédéfinie, ledit miroir 7 s'étendant dans un deuxième plan (P2) décalé à un angle $\alpha$ compris entre 20 et 80° par rapport au premier plan (P1). Le deuxième élément 4 comprend une troisième face 12 s'étendant dans un troisième plan (P3) orthogonal à ladite direction prédéfinie, les deuxième et troisième plans (P2,P3) étant décalés d'un angle $\alpha'$ égal, en valeur, à $\alpha$.

Dans un mode de réalisation montré sur la figure 5, est représenté un dispositif d'analyse et/ou de génération 1a, 1b d'un état de polarisation dans lequel l'ensemble optique 6 est constitué de trois miroirs 7. Plus précisément, les miroirs 7 sont orientés de sorte que le faisceau lumineux soit successivement réfléchi par un premier miroir 7a, puis un second miroir 7b et ensuite un troisième miroir 7c. Grâce au nombre impair de miroirs, la matrice de Mueller MI est de la forme souhaitée. L'utilisation de plusieurs miroirs 7 permet de faire varier l'angle entre les miroirs 7 et d'adapter l'ensemble optique à un logement de la machine dans laquelle le dispositif d'analyse et/ou génération est installée.

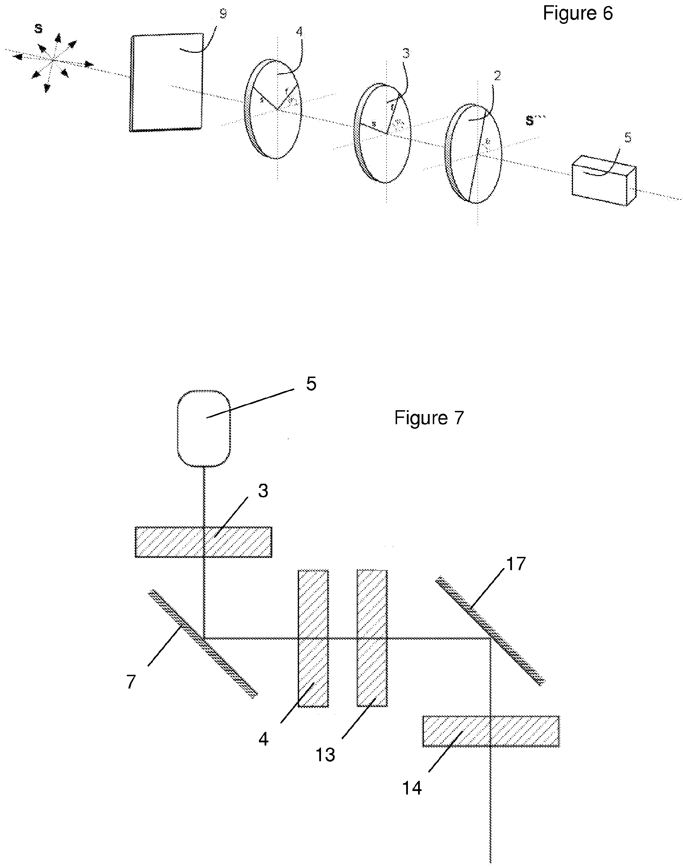

Dans un mode de réalisation montré sur la figure 7, est représenté un dispositif 1a, 1b d'analyse et/ou génération dans lequel quatre éléments biréfringents 3, 4, 13, 14 sont utilisés.

Plus précisément, un troisième élément biréfringent 13 est en regard d'un deuxième élément biréfringent 4, sur le trajet optique du faisceau lumineux. Le faisceau lumineux est alors destiné à être dirigé directement ou indirectement vers un deuxième miroir 17 pour être réfléchi. En conséquence, le faisceau lumineux est réfléchi (a minima) une deuxième fois. En regard, du deuxième miroir 17, sur le trajet optique du faisceau lumineux réfléchi par le deuxième miroir 17, est agencé un quatrième élément biréfringent 14. Cette configuration garantit un conditionnement optimal des instruments de mesure de la polarisation. Le polariseur 2 peut être agencé, en amont du premier élément biréfringent 3 ou en aval du quatrième élément biréfringent 14 selon que le dispositif 1a, 1b est destinée à l'analyse d'un état de polarisation d'un point de mesure de l'objet cible ou à la génération d'un état de polarisation d'un point de mesure de l'objet cible.

## Revendications

1.  Dispositif d'analyse et/ou de génération d'un état de polarisation d'un point de mesure d'un objet cible, le dispositif comprenant :

    - un polariseur (2) propre à sélectionner, dans une onde lumineuse incidente, un faisceau lumineux polarisé rectilignement selon une direction prédéfinie,
    - un premier élément biréfringent (3) propre à être traversé par ledit faisceau lumineux,
    - un deuxième élément biréfringent (4) identique au premier élément et propre à être traversé par ledit faisceau lumineux, ledit faisceau lumineux étant alors destiné à être dirigé directement ou indirectement vers ledit objet pour être réfléchi sous la forme d'un faisceau réfléchi,

    caractérisé ce qu'un ensemble optique (6), constitué d'un ou plusieurs éléments optiques, est situé sur un trajet optique compris entre le premier élément et le deuxième élément, l'ensemble optique étant constitué de :

    - un nombre impair de miroirs (7), ou,
    - un nombre impair de lames demi-onde (8), ou,
    - un nombre confondu impair de miroirs (7) ou lames demi-onde (8).

2.  Dispositif selon la revendication précédente, dans lequel le premier élément et/ou le deuxième élément est :

    - une lame biréfringente mobile en rotation, ou
    - un élément à cristaux liquides nématiques.

3. Dispositif selon l'une quelconque des revendications précédentes, dans lequel le dispositif comprend une source lumineuse (S) propre à émettre un faisceau lumineux, ladite source lumineuse étant propre à émettre un faisceau en amont du polariseur.

4. Dispositif selon l'une des revendications précédentes, dans lequel :

- le premier élément comprend une première face s'étendant dans un premier plan (P1) orthogonal à ladite direction prédéfinie, un miroir s'étendant dans un deuxième plan (P2) sécant d'un angle $\alpha$ compris entre 20° et 80° par rapport au premier plan (P1),

le deuxième élément comprend une troisième face s'étendant dans un troisième plan (P3) orthogonal à ladite direction prédéfinie, les deuxième et troisième plans étant sécants d'un angle $\alpha'$ égal, en valeur, à $\alpha$.

5. Dispositif selon l'une quelconque des revendications précédentes, dans lequel l'ensemble optique comprend une pluralité d'éléments biréfringents en nombre pair.

6. Dispositif selon l'une quelconque des revendications précédentes, dans lequel le dispositif comprend en outre un capteur (5) propre à convertir le faisceau réfléchi en un signal électrique.

7. Méthode de génération d'un état de polarisation d'un point de mesure d'un objet cible comportant les étapes suivantes :

- Sélectionner dans une onde lumineuse incidente un faisceau incident polarisé rectilignement selon une direction prédéfinie,
- traverser successivement un premier élément biréfringent (3) puis un deuxième élément biréfringent (4) avec ledit faisceau incident,
- diriger directement ou indirectement le faisceau en amont du deuxième élément biréfringent vers ledit objet qui émet alors un faisceau réfléchi,

**caractérisé en ce que** la méthode comprend en outre une étape consistant à compenser la dérive de phase desdits premier et deuxième éléments par l'intégration d'un ensemble optique (6), constitué d'un ou plusieurs éléments optiques, situé sur un trajet optique du faisceau compris entre lesdits premier et deuxième éléments, l'ensemble optique étant constitué de :

- un nombre impair de miroirs (7), ou,
- un nombre impair de lames demi-onde (8), ou,
- un nombre confondu impair de miroirs (7) ou lames demi-onde (8).

8. Méthode d'analyse d'un état de polarisation d'un point de mesure d'un objet cible comportant les étapes suivantes :

- Emettre un faisceau réfléchi issu dudit objet et le diriger directement ou indirectement en aval d'un deuxième élément biréfringent (4),
- traverser successivement le deuxième élément biréfringent, puis un premier élément biréfringent (3) avec ledit faisceau réfléchi,
- convertir le faisceau réfléchi en un signal électrique,

**caractérisé en ce que** la méthode comprend en outre une étape consistant à compenser la dérive de phase desdits premier et deuxième éléments par l'intégration d'un ensemble optique (6), constitué d'un ou plusieurs éléments optiques sur un trajet optique du faisceau compris entre lesdits premier et deuxième éléments, l'ensemble optique étant constitué de :

- un nombre impair de miroirs (7), ou,
- un nombre impair de lames demi-onde (8), ou,
- un nombre confondu impair de miroirs (7) ou lames demi-onde (8).

9. Appareil médical comprenant un dispositif d'analyse et/ou de génération tel que défini dans l'une des revendications 1 à 6.

**Patentansprüche**

1. Vorrichtung zur Analyse und/oder Erzeugung eines Polarisationszustandes eines Messpunktes eines Zielobjektes, wobei die Vorrichtung umfasst:

   - einen Polarisator (2), der dazu geeignet ist, aus einer einfallenden Lichtwelle einen Lichtstrahl auszuwählen, der in einer vordefinierten Richtung linear polarisiert ist,
   - ein erstes doppelbrechendes Element (3), das dazu geeignet ist, von dem Lichtstrahl durchquert zu werden,
   - ein zweites doppelbrechendes Element (4), das mit dem ersten Element identisch und dazu geeignet ist, von dem Lichtstrahl durchquert zu werden, wobei der Lichtstrahl folglich dazu bestimmt ist, direkt oder indirekt zu dem Objekt gelenkt zu werden, um in der Form eines reflektierten Strahls reflektiert zu werden,

   **dadurch gekennzeichnet, dass** eine optische Anordnung (6), die aus einem oder mehreren optischen Elementen gebildet ist, in einem optischen Pfad angeordnet ist, der zwischen dem ersten Element und dem zweiten Element umfasst ist, wobei die optische Anordnung gebildet ist aus:

   - einer ungeraden Anzahl von Spiegeln (7), oder
   - einer ungeraden Anzahl von Halbwellenplatten (8), oder
   - einer ungeraden gemischten Anzahl von Spiegeln (7) oder Halbwellenplatten (8).

2. Vorrichtung nach dem vorstehenden Anspruch, bei der das erste Element und/oder das zweite Element ist:

   - eine drehbewegliche doppelbrechende Platte, oder
   - ein Element aus nematischen Flüssigkristallen.

3. Vorrichtung nach einem der vorstehenden Ansprüche, bei der die Vorrichtung eine Lichtquelle (S) umfasst, die dazu geeignet ist, einen Lichtstrahl zu emittieren, wobei die Lichtquelle dazu geeignet ist, einen Strahl stromaufwärts des Polarisators zu emittieren.

4. Vorrichtung nach einem der vorstehenden Ansprüche, bei der:

   - das erste Element eine erste Fläche umfasst, die sich in einer ersten Ebene (P1) orthogonal zu der vordefinierten Richtung erstreckt, wobei sich ein Spiegel in einer zweiten Ebene (P2) erstreckt, die in Bezug auf die erste Ebene (P1) in einem Winkel $\alpha$ von zwischen 20° und 80° steht,

   das zweite Element eine dritte Fläche umfasst, die sich in einer dritten Ebene (P3) orthogonal zu der vordefinierten Richtung erstreckt, wobei die zweite und dritte Ebene in einem Winkel $\alpha'$ von gleichem Wert wie $\alpha$ stehen.

5. Vorrichtung nach einem der vorstehenden Ansprüche, bei der die optische Anordnung eine Vielzahl von doppelbrechenden Elementen in gerader Anzahl umfasst.

6. Vorrichtung nach einem der vorstehenden Ansprüche, bei der die Vorrichtung des Weiteren einen Sensor (5) umfasst, der dazu geeignet ist, den reflektierten Strahl in ein elektrisches Signal umzuwandeln.

7. Verfahren zur Erzeugung eines Polarisationszustandes eines Messpunktes eines Zielobjektes, das die folgenden Schritte umfasst:

   - Auswählen, aus einer einfallenden Lichtwelle, eines einfallenden Strahls, der in einer vordefinierten Richtung linear polarisiert ist,
   - aufeinanderfolgendes Durchqueren, mit dem einfallenden Strahl, eines ersten doppelbrechenden Elements (3), danach eines zweiten doppelbrechenden Elements (4),
   - direktes oder indirektes Lenken des Strahls stromaufwärts des zweiten doppelbrechenden Elements zu dem Objekt, das folglich einen reflektierten Strahl emittiert,

   **dadurch gekennzeichnet, dass** das Verfahren des Weiteren einen Schritt umfasst, der darin besteht, die Phasenverschiebung des ersten und zweiten Elements durch das Einfügen einer aus einem oder mehreren optischen Elementen gebildeten optischen Anordnung (6) zu kompensieren, die in einem optischen Pfad des Strahls angeordnet ist, der zwischen dem ersten und zweiten Element umfasst ist, wobei die optische Anordnung gebildet ist aus:

- einer ungeraden Anzahl von Spiegeln (7), oder
- einer ungeraden Anzahl von Halbwellenplatten (8), oder
- einer ungeraden gemischten Anzahl von Spiegeln (7) oder Halbwellenplatten (8).

**8.** Verfahren zur Analyse eines Polarisationszustandes eines Messpunktes eines Zielobjekts, das die folgenden Schritte umfasst:

- Emittieren eines von dem Objekt stammenden reflektierten Strahls und Lenken desselben direkt oder indirekt stromabwärts eines zweiten doppelbrechenden Elements (4),
- aufeinanderfolgendes Durchqueren, mit dem reflektierten Strahl, des zweiten doppelbrechenden Elements, danach eines ersten doppelbrechenden Elements (3),
- Umwandeln des reflektierten Strahls in ein elektrisches Signal,

**dadurch gekennzeichnet, dass** das Verfahren des Weiteren einen Schritt umfasst, der darin besteht, die Phasenverschiebung des ersten und zweiten Elements durch das Einfügen einer optischen Anordnung (6) zu kompensieren, die aus einem oder mehreren optischen Elementen in einem optischen Pfad des Strahls gebildet ist, der zwischen dem ersten und zweiten Element umfasst ist, wobei die optische Anordnung gebildet ist aus:

- einer ungeraden Anzahl von Spiegeln (7), oder
- einer ungeraden Anzahl von Halbwellenplatten (8), oder
- einer ungeraden gemischten Anzahl von Spiegeln (7) oder Halbwellenplatten (8).

**9.** Medizinisches Gerät, das eine Vorrichtung zur Analyse und/oder Erzeugung wie in einem der Ansprüche 1 bis 6 definiert umfasst.

## Claims

**1.** A device for analyzing and/or generating a polarization state of a measurement point of a target object, the device comprising:

- a polarizer (2) suitable for selecting, from incident light waves, a light beam rectilinearly polarized in a predefined direction,
- a first birefringent element (3) suitable for being passed through by said light beam,
- a second birefringent element (4) identical to the first element and suitable for being passed through by said light beam, said light beam then being intended to be directed directly or indirectly toward said object to be reflected in the form of a reflected beam,

**characterized in that** an optical assembly (6), consisting of one or more optical elements, is situated on an optical path lying between the first element and the second element, the optical assembly consisting of:

- an odd number of mirrors (7), or,
- an odd number of half-wave plates (8), or,
- an odd combined number of mirrors (7) or half-wave plates (8).

**2.** The device as claimed in the preceding claim, in which the first element and/or the second element is:

- a rotationally mobile birefringent plate, or
- a nematic liquid crystal element.

**3.** The device as claimed in any one of the preceding claims, in which the device comprises a light source (S) suitable for emitting a light beam, said light source being suitable for emitting a beam upstream of the polarizer.

**4.** The device as claimed in one of the preceding claims, in which:

- the first element comprises a first face extending in a first plane (P1) orthogonal to said predefined direction, a mirror extending in a second plane (P2) secant by an angle $\alpha$ of between 20° and 80° relative to the first plane (P1),

the second element comprises a third face extending in a third plane (P3) orthogonal to said predefined direction, the second and third planes being secant by an angle $\alpha$' equal, in value, to $\alpha$.

5. The device as claimed in any one of the preceding claims, in which the optical assembly comprises an even number plurality of birefringent elements.

6. The device as claimed in any one of the preceding claims, in which the device further comprises a sensor (5) suitable for converting the reflected beam into an electrical signal.

7. A method for generating a polarization state of a measurement point of a target object comprising the following steps:

   - selecting, from incident light waves, an incident beam rectilinearly polarized in a predefined direction,
   - passing successively through a first birefringent element (3) then a second birefringent element (4) with said incident beam,
   - directly or indirectly directing the beam upstream of the second birefringent element toward said object which then emits a reflected beam,

   **characterized in that** the method further comprises a step consisting in compensating the phase drift of said first and second elements by the inclusion of an optical assembly (6), consisting of one or more optical elements, situated on an optical path of the beam lying between said first and second elements, the optical assembly consisting of:

   - an odd number of mirrors (7), or,
   - an odd number of half-wave plates (8), or,
   - an odd combined number of mirrors (7) or half-wave plates (8).

8. A method for analyzing a polarization state of a measurement point of a target object comprising the following steps:

   - emitting a reflected beam from said object and directing it directly or indirectly downstream of a second birefringent element (4),
   - passing successively through the second birefringent element, then a first birefringent element (3), with said reflected beam,
   - converting the reflected beam into an electrical signal,

   **characterized in that** the method further comprises a step consisting in compensating the phase drift of said first and second elements by the inclusion of an optical assembly (6), consisting of one or more optical elements on an optical path of the beam lying between said first and second elements, the optical assembly consisting of:

   - an odd number of mirrors (7), or,
   - an odd number of half-wave plates (8), or,
   - an odd combined number of mirrors (7) or half-wave plates (8).

9. A medical apparatus comprising an analysis and/or generation device as defined in one of claims 1 to 6.

Figure 1

**Objet cible, S**

Figure 2

**Objet cible, S**

Figure 3

Objet cible

Figure 4

Objet cible

Figure 5

Objet cible

Figure 6

Figure 7

**EP 3 019 841 B1**

## RÉFÉRENCES CITÉES DANS LA DESCRIPTION

**Documents brevets cités dans la description**

- US 20040130717 A